# NEUE EUROPÄISCHE PATENTSCHRIFT

(11) **EP 2 182 203 B2**
(45) Veröffentlichungstag und Bekanntmachung des Hinweises auf die Entscheidung über den Einspruch: **02.11.2016**
(45) Hinweis auf die Patenterteilung: 24.07.2013
(21) Anmeldenummer: 09013806.6
(22) Anmeldetag: 03.11.2009
(51) Int. Cl.: F03D 1/06, F03D 80/00

(54) **Rotorblatt mit Blattspitzenverlängerung für eine Windenergieanlage**
Wind turbine rotor blade with an extension
Pale d'éolienne comprenant une extension

(30) Priorität: 03.11.2008 DE 102008054323
(43) Veröffentlichungstag der Anmeldung: 05.05.2010
(73) Patentinhaber: Energiekontor AG, 28359 Bremen (DE)
(72) Erfinder: Wilkens, Bodo, 28205 Bremerhaven (DE)
(74) Vertreter: Philipp, Matthias

(56) Entgegenhaltungen:
- WO-A1-03/078833
- WO-A1-03/078833
- WO-A1-2006/002621
- WO-A2-2005/031158
- WO-A2-2008/071195
- DE- - 1 045 810
- DE-A1- 10 235 496
- DE-A1-102005 051 537
- DE-A1-102006 034 830
- DE-A1-102007 006 643
- DE-A1-102007 020 439
- JP-A- 2005 147 086
- US-A1- 2006 018 759
- US-A1- 2008 075 603
- "Blade System Design Studies Volume I: Composite Technologies for Large Wind Turbine Blades" Sandia National Laboratories; http://lfwindpower.sandia.gov/other/021879. pdf

## Beschreibung

Die Erfindung betrifft ein Rotorblatt für eine Windenergieanlage, bestehend aus einem ursprünglichen Rotorblatt und einer damit verbundenen Blattspitzenverlängerung.

Durch Anbringen von Blattspitzenverlängerungen an vorhandenen Rotorblättern kann eine deutliche Ertragssteigerung einer existierenden Windenergieanlage auf relativ kostengünstige Weise erzielt werden. In Fällen, in denen am Standort eines Windparks geringere Geschwindigkeiten als prognostiziert auftreten und auch die maximalen Windgeschwindigkeiten geringer ausfallen, besteht die Möglichkeit, durch früheres Abschalten eventuell auftretende Maximallasten zu reduzieren, um so die Erhöhung der Lasten durch die Blattverlängerung zu kompensieren, ohne viel Energie im Starkwindbereich zu verlieren.

Aus der DE 735 404 ist eine Blattspitzenverlängerung für eine Windkraftanlage bekannt, deren Realisierung allerdings technisch und aerodynamisch unbefriedigend ist. Die DE 10 2007 006 643 A1 offenbart ein Nachrüstteil für ein Rotorblatt einer Windenergieanlage, das an die Blattspitze angepaßt ist und ein Bauteil zur Verlängerung des Rotorblatts aufweisen kann.

Die Erfindung hat sich zur Aufgabe gestellt, ein gattungsgemäßes Rotorblatt mit einer Blattspitzenverlängerung zu schaffen, bei dem ein guter aerodynamischer Übergang zwischen dem ursprünglichen Rotorblatt und der Blattspitzenverlängerung besteht und die entstehenden Windlasten der Blattspitzenverlängerung problemlos auf das ursprüngliche Blatt übertragen werden können.

Diese Aufgabe wird erfindungsgemäß gelöst durch ein Rotorblatt für eine Windenergieanlage, bestehend aus einem ursprünglichen Rotorblatt und einer damit verbundenen Blattspitzenverlängerung, wobei die Blattspitzenverlängerung zwei glasfaserverstärkte Halbschalen aufweist, die miteinander und mit einem Endbereich des ursprünglichen Rotorblatts verklebt sind, wobei im Bereich einer Blattspitze des ursprünglichen Rotorblatts im wesentlichen senkrecht zu einer Blattlängsachse eine Rippe zwischen den Halbschalen angeordnet ist und die Rippe mit einem zentralen Ausschnitt zur Aufnahme der Blattspitze des ursprünglichen Rotorblatts versehen ist, der an die Form der Blattspitze angepasst ist.

Von der Rippe kann in Richtung auf die Blattspitze der Blattspitzenverlängerung verlaufend mindestens ein Verstärkungssteg angeordnet sein.

Zweckmäßigerweise sind zwei Verstärkungsstege parallel zueinander angeordnet.

Jeder Verstärkungssteg kann einen Schaumkem und vier damit verbundene Klebewinkel aufweisen.

Es ist zweckmäßig, wenn die Verstärkungsstege über eine Blindverklebung mit den Halbschalen verbunden sind.

Jede Halbschale kann mit parallel zur Blattlängsachse verlaufenden und außenseitig angeordneten Verstärkungsbändem versehen sein.

Vorteilhaft ist vorgesehen, dass die Blattspitzenverlängerung mit einer Entwässerungsbohrung versehen ist.

Bevorzugt ist weiterhin vorgesehen, dass die Blattspitzenverlängerung mit einem Blitzrezeptor versehen ist, der mit dem Blitzschutz des ursprünglichen Rotorblatts verbunden ist.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine schematische Draufsicht auf einen Endbereich eines erfindungsgemäßen Rotorblatts zeigt;
Fig. 2 in einer Ansicht entsprechend Fig. 1 einen Lagenaufbau der Blattspitzenverlängerung zeigt;
Fig. 3 in einer entsprechenden Ansicht die Position der Verstärkungsstege und der Rippe erläutert;
Fig. 4 in einer entsprechenden Ansicht die Lage von Entwässerungsbohrungen zeigt;
Fig. 5 in einer Querschnittsansicht den Aufbau der Blattspitzenverlängerung erläutert;
Fig. 6a und 6b in einer Querschnitts- bzw. ausschnittsweisen Längsschnittansicht den Aufbau der Rippe erläutern; und
Fig. 7a und 7b eine Variante zu Fig. 6a, b erläutern.

Die der Erfindung zugrundeliegende Blattspitzenverlängerung besteht im wesentlichen aus einem auf den Endbereich eines vorhandenen Rotorblatts 2 aufsetz- oder aufschiebbaren schalenartigen Hohlkörper, der aus zwei glasfaserverstärkten, zusammengeklebten Halbschalen, Oberschale 3a und Unterschale 3b, gebildet ist.

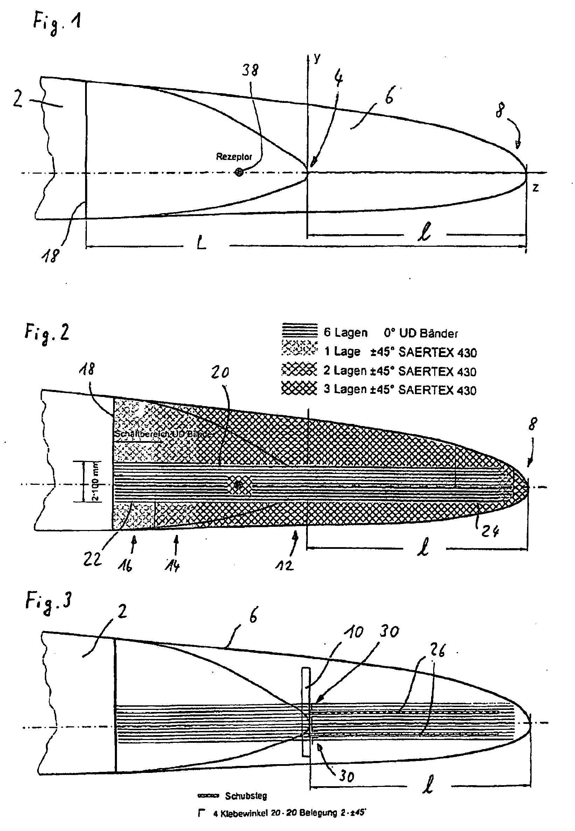

Fig. 1 zeigt eine schematische Draufsicht auf einen Endbereich eines vorhandenen Rotorblatts 2, dessen Blattspitze 4 sowie die erfmdungsgemäße Blattspitzenverlängerung 6. In dem dargestellten Beispiel wird das vorhandene Rotorblatt 2 durch die Blattspitzenverlängerung 6 um eine Länge 1 von 1 m verlängert, während die Gesamtlänge L der Blattspitzenverlängerung 6 2 m beträgt, wobei sich das vorhandene Rotorblatt und die Blattspitzenverlängerung in einem Bereich von 1 m überlappen.

Wie Fig. 1 zeigt, hat das Koordinatensystem des Blattaußenbereichs seinen Ursprung weiterhin in der Blattspitze 4 des vorhandenen Rotorblatts 2. Die x-Achse zeigt in Richtung Profiloberseite (Saugseite), die y-Achse in Richtung Endkante und die z-Achse von der Blattwurzel in Richtung Blattspitze. Die z-Achse liegt dabei auf einer gedachten Linie 42% hinter der Blattvorderkante (LE) des Trapezteils des vorhandenen Rotorblatts 2.

Die Blattspitzenverlängerung 6 ist an drei Stellen formschlüssig an dem vorhandenen Rotorblatt fixiert, so dass die Position der Blattspitzenverlängerung bei der Montage durch Verklebung ohne zusätzliche Hilfsmittel vorgegeben ist. Zunächst ist an einem in Richtung der Blattwurzel weisenden Ende der Blattspitzenverlängerung 6, im dargestellten Beispiel bei z = - 1000 mm, das Profil des vorhandenen Rotorblatts an der Ober- und Unterseite und an der Nase formschlüssig mit der Blattspitzenverlängerung 6 verbunden und wird während der Verklebung durch eine Schablone und entsprechende Spannbänder gehalten.

An einem Punkt zwischen der Blattspitze 4 des vorhandenen Rotorblatts 2 und einer Blattspitze 8 der Blattspitzenverlängerung 6, in dem dargestellten Beispiel beispielsweise bei z = 260 mm, wird der vorhandene Rezeptor 38 des Blitzschutzes verlängert und ein neuer Blitzrezeptor mit dem alten Blitzschutz formschlüssig verschraubt.

Schließlich wird im Bereich der Blattspitze 4 des vorhandenen Rotorblatts 2 eine Rippe 10 formschlüssig mit der Blattspitze 4 verbunden und verklebt.

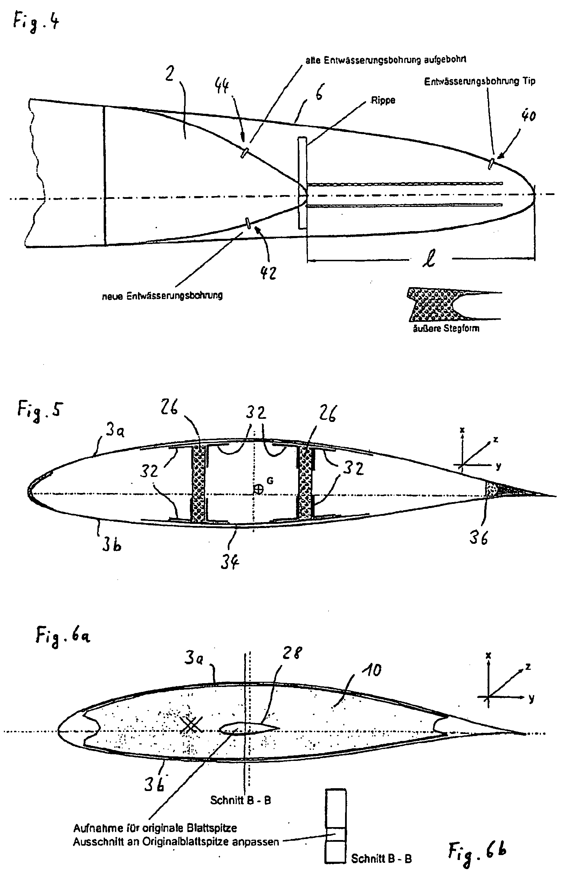

Damit die Klebestelle im Bereich des in Richtung Blattwurzel weisenden Endes oder Randes 18 der Blattspitzenverlängerung 6 eine definierte Fläche aufweist und nur eine bestimmte Klebstoffmenge aufnimmt, wird in einem festen Abstand von dem Ende 18 der Blattspitzenverlängerung 6, beispielsweise bei z = -750 mm, eine Sperre 36 (Fig. 5) für den Klebstoff auf der Innenseite der Blattspitzenverlängerung 6 angeordnet, beispielsweise angeklebt. Diese Sperre soll verhindern, dass beim Aufschiebevorgang der Blattspitzenverlängerung der Klebstoff, beispielsweise Klebeharz, unkontrolliert in äußere Bereiche der Blattspitzenverlängerung 6 geschoben wird.

Fig. 2 zeigt den lageweisen Aufbau der Halbschalen 3a, b, aus denen die Blattspitzenverlängerung 6 gebildet ist. In einem äußeren Bereich 12, dessen Länge zwischen 50% und 80% der Gesamtlänge L der Blattspitzenverlängerung 6 betragen kann, sind drei Lagen ± 45° E-Glas (Bidiagonal-Glas-Gelege) mit einer Faserdichte von 2,6 g/cm³ angeordnet, mit einem Flächengewicht von jeweils 443 g/m². Die Dicke einer Lage beträgt 0,52 mm bei einer Harzdichte von 1,12 kg/dm³ und 33 % Faservolumengehalt.

In einem mittleren Bereich 14 sind zwei Lagen ± 45° E-Glas mit entsprechenden Eigenschaften angeordnet, und in einem inneren Bereich 16 eine Lage ± 45° E-Glas ebenfalls mit entsprechenden Eigenschaften. Der zur Blattwurzel weisende Rand 18 der Blattspitzenverlängerung 6 wird als Abreißgewebe gebildet.

Eine Verstärkungsbahn bzw. ein Verstärkungsband 20 ist aus mehreren Lagen, hierbei 6, aus unidirektionalem Glasgelege gebildet und erstreckt sich von dem zur Wurzel weisenden Rand 18 bis zur Blattspitze 8. Im Bereich des Randes 18 weist die Verstärkungsbahn 20 einen Schäftbereich 22 mit einer Länge von 200 mm auf. Im Bereich der Blattspitze 8 ist ein Ausdünnungsbereich 24 mit einer Länge von 400 mm vorgesehen.

Der beschriebene Aufbau ist für beide Halbschalen (Ober- und Unterschale) der Blattspitzenverlängerung 6 gleich.

Fig. 3 bis 7 erläutern die Rippe 10 sowie einen oder zwei Verstärkungs- oder Schubstege 26, der/die im äußeren Bereich der Blattspitzenverlängerung 6 vorgesehen ist/sind.

Wie Fig. 3 und 6, 7 zeigen, sitzt die Rippe 10 formschlüssig zwischen den Halbschalen 3a, b und weist einen zentralen Ausschnitt bzw. eine zentrale Aufnahme 28 auf, um die Blattspitze 4 des vorhandenen Rotorblatts 2 formschlüssig aufzunehmen. Dadurch werden die Auftriebskräfte der Blattspitzenverlängerung großflächig auf die Blattspitze 4 des vorhandenen Rotorblatts 2 übertragen. Weiterhin positioniert die Rippe 10 die Blattspitzenverlängerung 6 während des Montagevorgangs und steift den Bereich des größten Biegemoments der Blattspitzenverlängerung aus.

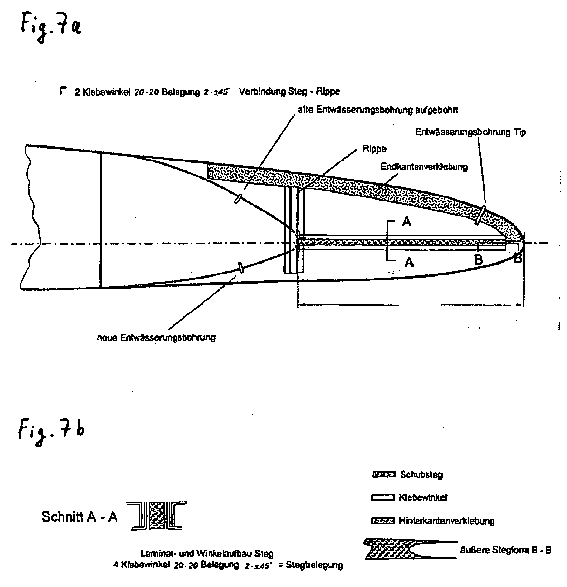

Zwei Verstärkungsstege 26 (Fig. 7a, b: ein Verstärkungssteg) erstrecken sich beginnend an der Rippe 10 parallel zur Längsrichtung (z-Achse) des Rotorblatts 2 mit gegenseitigem Abstand bis in den Bereich der Blattspitze 8. Wie Fig. 3 zeigt, sind die Verstärkungsstege 26 an ihren Enden jeweils beidseitig durch vier Klebewinkel 30 mit der Rippe 10 verbunden.

In der in Fig. 7a, b dargestellten Variante ist nur ein einziger Schubsteg 26 vorhanden. Die Konstruktion der Blattverlängerung besteht dabei in der gleichen Negativbauweise mit zusammengeklebten Halbschalen. Im Außenbereich sind die beiden Schalenhälften abweichend von der ursprünglichen Zwei-Steg-Variante mit einem Schubsteg mit +/- 45° Glas-Gelege belegtem Stützschaum verbunden.

Die Laminatbelegungen der beiden Verstärkungsstege werden bei dieser Variante auf die Vorder- und Rückseite eines einzelnen Stegs verteilt, so dass sich an der Lagenzahl und -ausrichtung nichts ändert. Lediglich die Beulfelder würden sich vergrößern. Dies wird durch die im Endbereich vergrößerter Klebefläche kompensiert.

Die Stegbelegung wird gleichzeitig in Form von Winkellagen für die spätere Verklebung ausgeführt. Dies vereinfacht den Fertigungsaufwand und reduziert die Anzahl der Verklebungen.

Fig. 5 zeigt einen Querschnitt im Bereich der Blattspitze 8 und lässt die Anordnung der Verstärkungsstege 26, die als Schaumstege ausgebildet sind, erkennen (Variante entspr. Fig. 6a, b). Die Verstärkungsstege sind mittels acht Klebewinkeln 32 mit den Halbschalen der Blattspitzenverlängerung 6 verbunden, und zwar mit einer Blindverklebung 34 mit Klebeharz.

In dem dargestellten Ausführungsbeispiel (Fig. 6a, b) haben die Verstärkungsstege einen gegenseitigen Abstand von 100 mm, während sich die Blindverklebung über eine Länge, in Blatttiefenrichtung y gesehen, von 200 mm erstreckt.

Fig. 5 zeigt ferner einen Klebestopp (Sperre) 36, dessen Funktion bereits erläutert worden ist und der beispielsweise in die Oberschale 3a geklebt sein kann.

Fig. 4 erläutert die Anordnung einer Entwässerungsbohrung 40 im Bereich der Blattspitze 8 sowie einer weiteren Entwässerungsbohrung 42 im Bereich der Blattspitze 4 des ursprünglichen Rotorblatts 2, während eine Entwässerungsbohrung 44 des ursprünglichen Rotorblatts 2 aufgebohrt ist.

In der Praxis hat sich für die beschriebene Blattspitzenverlängerung eine Masse von ca. 14 kg ergeben, wobei sich aus den zu erwartenden Betriebsbedingungen und Drehzahlen aerodynamischer Kräfte und Fliehkräfte ergeben, die von der Verbindung der Blattspitzenverlängerung mit dem Rotorblatt gut aufgenommen werden können.

Aufgrund der relativ geringen Größe und des geringen Gewichts der erfindungsgemäßen Blattspitzenverlängerung kann diese ohne Demontage der Rotorblätter mit einer Hubbühne unmittelbar an einer existierenden Windenergieanlage montiert werden. Zunächst wird ein erstes auszustattendes Rotorblatt in senkrecht nach unten hängender Position geparkt und die Hubbühne zur Blattspitze hochgefahren. Die Position des zur Blattwurzel weisenden Endes der Blattspitzenverlängerung wird an dem Rotorblatt markiert, im oben beschriebenen Beispiel also z = - 1000 mm. Die Klebebereiche am Blatt werden nach Aufmass freigeschliffen, etwa in Streifen von ca. 250 - 300 mm in Richtung der Blattspitze und im Bereich der Blattspitze des Rotorblatts selbst. Die Blattspitzenverlängerung wird angepasst, insbesondere die formschlüssige Passung der Blattspitze des Rotorblatts und der Rippe und der Klebebereich am zur Blattwurzel weisenden Ende der Blattspitzenverlängerung. Gegebenenfalls werden Rippenausschnitt und Klebebereiche nachgearbeitet.

Anschließend wird der Blitzrezeptor an der Ober- und Unterseite des Rotorblatts demontiert. Eine Schablone für das Rezeptorloch wird mit Klebeband positioniert und in Richtung der Blattwurzel umgeschlagen. In die neue Blattspitze wird ein Rezeptorloch gebohrt, und die Rezeptoradapterstücke werden in die alten Rezeptoraufnahmen geschraubt.

Die Entwässerungsbohrungen werden freigelegt und vergrößert, und es wird eine zusätzliche Entwässerungsbohrung in der Vorderkante des ursprünglichen Rotorblatts gesetzt.

Die Endkante der Blattspitzenverlängerung wird mit einem Keil in geöffneter Position fixiert, d.h. die Halbschalen haben an der Endkante einen Abstand voneinander.

Klebeharz wird angemischt und auf die Klebestellen der Blattverlängerung aufgebracht, wobei die Harzmengen dokumentiert werden. Anschließend wird die Blattspitzenverlängerung mit offener Endkante bis zum Anschlag auf die Rippe aufgeschoben. Eine Sichtkontrolle erfolgt durch die noch offene Endkante zur Prüfung der Verklebung zwischen ursprünglicher Blattspitze und Rippe. Danach wird die Endkante geschlossen und am zur Blattwurzel weisenden Rand der Blattspitzenverlängerung formschlüssig mittels einer Schablone und Spannbindern verpresst, auch im übrigen Bereich der Endkante.

Nach Verschraubung des Rezeptors an Ober- und Unterseite erfolgt der Härtevorgang, wonach etwaige Klebeharzreste gewogen und dokumentiert werden.

Am darauffolgenden Tag werden die Hilfsmittel entfernt und der Blattstrak einer Sichtkontrolle unterworfen. Das Abreißgewebe im Bereich der Verklebung des zur Blattwurzel weisenden Rands der Blattspitzenverlängerung wird entfernt, die Klebenähte durch Schleifen und Schäften bearbeitet und ein Decklaminat aufgebracht. Feinarbeiten wie Abspachteln, Schleifen und Beilackieren sowie eine Temperung mit Heizfolie oder -matte während sechs bis sieben Stunden bei 62 bis 70° C schließen den Montagevorgang ab.

Nach Wiederholung der obigen Schritte für die übrigen Rotorblätter der Windenergieanlage wird die Arbeitsbühne demontiert und das Gewicht der Klebeharzreste kontrolliert. Es erfolgt eine Massenbilanz der Blattspitzenverlängerungen inklusive Harze, Lacke und Reste. Bei einem Testlauf der Anlage wird eine etwaige Unwucht kontrolliert, und Schwingungen und Geräusche werden beobachtet.

### Bezugszeichenliste

- 2: vorhandenes Rotorblatt
- 3a: Halbschale (Oberschale)
- 3b: Halbschale (Unterschale)
- 4: Blattspitze (von 2)
- 6: Blattspitzenverlängerung
- 8: Blattspitze (von 6)
- 10: Rippe
- 12: äußerer Bereich
- 14: mittlerer Bereich
- 16: innerer Bereich
- 18: Rand
- 20: Verstärkungsbahn (Verstärkungsband)
- 22: Schäftbereich
- 24: Ausdünnungsbereich
- 26: Verstärkungssteg
- 28: Aufnahme (Ausschnitt)
- 30: Klebewinkel
- 32: Klebewinkel
- 34: Blindverklebung
- 36: Kleberstopp (Sperre)
- 38: Blitzrezeptor
- 40: Entwässerungsbohrung (von 6)
- 42: weitere Entwässerungsbohrung (von 2)
- 44: ursprüngliche Entwässerungsbohrung (von 2)

- I: Länge der Verlängerung (von 2)
- L: Länge (von 6)

## Patentansprüche

1. Rotorblatt für eine Windenergieanlage, bestehend aus einem ursprünglichen Rotorblatt (2) und einer damit verbundenen Blattspitzenverlängerung (6), wobei die Blattspitzenverlängerung (6) zwei glasfaserverstärkte Halbschalen (3a, 3b) aufweist, die miteinander und mit einem Endbereich des ursprünglichen Rotorblatts (2) verklebt sind, wobei
im Bereich einer Blattspitze (4) des ursprünglichen Rotorblatts (2) im wesentlichen senkrecht zu einer Blattlängsachse (z) eine Rippe (10) zwischen den Halbschalen (3a, 3b) angeordnet ist, wobei
die Rippe (10) mit einem zentralen Ausschnitt (28) zur Aufnahme der Blattspitze (4) des ursprünglichen Rotorblatts (2) versehen ist, der an die Form der Blattspitze (4) angepasst ist.

2. Rotorblatt nach Anspruch 1, **dadurch gekennzeichnet, dass** von der Rippe (10) in Richtung auf die Blattspitze (8) der Blattspitzenverlängerung (6) verlaufend mindestens ein Verstärkungssteg (26) angeordnet ist.

3. Rotorblatt nach Anspruch 2, **dadurch gekennzeichnet, dass** zwei Verstärkungsstege (26) parallel zueinander angeordnet sind.

4. Rotorblatt nach Anspruch 2 oder 3, **dadurch gekennzeichnet, dass** jeder Verstärkungssteg (26) einen Schaumkern und vier Klebewinkel (30) aufweist.

5. Rotorblatt nach einem der Ansprüche 2 bis 4, **dadurch gekennzeichnet, dass** die Verstärkungsstege (26) über eine Blindverklebung (34) mit den Halbschalen (3a, 3b) verbunden sind.

6. Rotorblatt nach einem der vorangehenden Ansprüche, **dadurch gekennzeichnet, dass** jede Halbschale (3a, 3b) mit parallel zur Blattlängsachse (z) verlaufenden und außenseitig angeordneten Verstärkungsbändern (20) versehen ist.

7. Rotorblatt nach einem der vorangehenden Ansprüche, **dadurch gekennzeichnet, dass** die Blattspitzenverlängerung (6) mit einer Entwässerungsbohrung (40) versehen ist.

8. Rotorblatt nach einem der vorangehenden Ansprüche, **dadurch gekennzeichnet, dass** die Blattspitzenverlängerung (6) mit einem Blitzrezeptor (38) versehen ist, der mit einem Blitzschutz des ursprünglichen Rotorblatts (2) verbunden ist.

## Claims

1. Rotor blade for a wind turbine, comprised of an original rotor blade (2) and a blade tip extension (6) associated therewith, the blade tip extension (6) having two glass-fibre reinforced half shells (3a, 3b) which are connected with each other and glued with an end region of the original rotor blade (2), wherein
a rib (10) is arranged between the half shells (3a, 3b) in the region of a blade tip (4) of the original rotor blade (2) generally perpendicular to a rotor blade longitudinal axis (z),
the rib (10) being provided with a central section (28) adapted to the form of the blade tip (4) for receiving the blade tip (4) of the original rotor blade (2).

2. Rotor blade according to claim 1, **characterized in that** at least one reinforcing bar (26) extends from the rib (10) in the direction of the blade tip (8) of the blade tip extension (6).

3. Rotor blade according to claim 2, **characterized in that** two reinforcing bars (26) are arranged parallel to each other.

4. Rotor blade according to any one of claims 2 or 3, **characterized in that** each reinforcing bar (26) has a foam core and four adhesive brackets (30).

5. Rotor blade according to any one of claims 2 to 4, **characterized in that** the reinforcing bars (26) are connected by means of a blind bond (34) to the half shells (3a, 3b).

6. Rotor blade according to any one of the above claims, **characterized in that** each half shell (3a, 3b) is provided with reinforcement tapes (20) extending parallel to the blade longitudinal axis (z) and arranged on the outside.

7. Rotor blade according to any one of the above claims, **characterized in that** the blade tip extension (6) is provided with a drainage hole (40).

8. Rotor blade according to any one of the above claims, **characterized in that** the blade tip extension (6) is fitted with a lightning arrestor (38), which is connected to a lightning conductor of the original rotor blade (2).

## Revendications

1. Pale de rotor pour turbine éolienne, comprenant une pale de rotor (2) d'origine et une rallonge d'extrémité de pale (6) correspondante, la rallonge d'extrémité de pale (6) comportant deux demi-carters renforcés de fibres de verre (3a, 3b) qui sont mis en contact l'un avec l'autre et collés à une extrémité de la pale de rotor (2) d'origine.
une nervure (10) étant prévue entre les demi-carters (3a, 3b) au niveau d'une extrémité de pale (4) de la pale de rotor (2) d'origine de manière généralement perpendiculaire à un axe longitudinal (z) de la pale de rotor,
la nervure (10) comprenant une section centrale (28) adaptée à la forme de l'extrémité de pale (4) et servant à recevoir l'extrémité de pale (4) de la pale de rotor (2) d'origine.

2. Pale de rotor selon la revendication 1, **caractérisée en ce qu'**au moins l'une des barres de renfort (26) s'étend à partir de la nervure (10) en direction de l'extrémité de pale (8) de la rallonge d'extrémité de pale (6)

3. Pale de rotor selon la revendication 2, **caractérisée en ce que** deux barres de renfort (26) sont disposées parallèlement l'une par rapport à l'autre.

4. Pale de rotor selon l'une quelconque des revendications 2 ou 3, **caractérisée en ce que** chaque barre de renfort (26) comporte un noyau en mousse et quatre supports adhésifs (30).

5. Pale de rotor selon l'une quelconque des revendications 2 à 4, **caractérisée en ce que** les barres de renfort (26) sont raccordées au moyen d'un joint plein (34) aux demi-carters (3a, 3b).

6. Pale de rotor selon l'une quelconque des revendications précédentes, **caractérisée en ce que** chaque demi-carter (3a, 3b) comprend des bandes de renfort (20) s'étendant parallèlement à l'axe longitudinal (z) de la pale de rotor et disposées à l'extérieur.

7. Pale de rotor selon l'une quelconque des revendications précédentes, **caractérisée en ce que** la rallonge d'extrémité de pale (6) comporte un orifice de vidange (40).

8. Pale de rotor selon l'une quelconque des revendications précédentes, **caractérisée en ce que** la rallonge d'extrémité de pale (6) comporte un parafoudre (38), qui est raccordé à un paratonnerre de la pale de rotor (2) d'origine.
